**Europäisches Patentamt**

(19) **European Patent Office**

**Office européen des brevets**

(11) Publication number: **0 126 553**
**B1**

(12) **EUROPEAN PATENT SPECIFICATION**

(45) Date of publication of patent specification: **08.08.90**

(51) Int. Cl.⁵: **B 65 G 47/28**

(21) Application number: **84302713.7**

(22) Date of filing: **19.04.84**

(54) Mechanism for spacing and conveying articles in a packaging machine.

(30) Priority: **22.04.83 GB 8311035**
**13.01.84 GB 8400885**

(43) Date of publication of application:
**28.11.84 Bulletin 84/48**

(45) Publication of the grant of the patent:
**08.08.90 Bulletin 90/32**

(84) Designated Contracting States:
**AT BE CH DE FR GB IT LI LU NL SE**

(56) References cited:
**CH-A- 520 023**
**FR-A-2 243 894**
**GB-A- 926 776**
**US-A-3 093 234**
**US-A-3 454 142**

(73) Proprietor: **THE MEAD CORPORATION**
**Mead World Headquarters Courthouse Plaza**
**Northeast**
**Dayton Ohio 45463 (US)**

(72) Inventor: **Muller, Rolf**
**Brunostrasse 24**
**D-5503 Konz (DE)**

(74) Representative: **Hepworth, John Malcolm**
**J.M. Hepworth & Co. 36 Regent Place**
**Rugby Warwickshire CV21 2PN (GB)**

## Description

This invention relates to a spacer and conveying mechanism in or for a packaging machine which correctly spaces individual articles (preferably containers like bottles, cans or bricks of round, oval or square shape) which comprise a group for a multi-article package from one or more continuous article feed lines and holds the articles for movement together as a group in a predetermined position relative to one another.

CH—A—520 023 which corresponds to the preamble of claim 1 shows a conveying mechanism for a packaging machine in which articles can be conveyed along a feed path and grouped together for subsequent packaging of each group into a discrete unit. The conveying mechanism has a series of carriages constrained cyclically to execute a working and return motion such that the carriages move along a working path in the feed direction of the articles during which the elements convey the articles along the feed path, and move along a return path opposite to the feed direction of the articles during which the carriages are remote from the articles. The working and return paths are substantially parallel to said feed path. ·

However in this prior arrangement the spacing and grouping of the articles is not performed by the carriages comprising the conveyor means but the spacing of the articles is performed by a wheel which places the articles onto the carriages.

FR—A—2 243 894 discloses a conveying mechanism which includes conveyor elements having operative faces which face toward the article feed path at all times but which move but a single article at a time. The mechanism disclosed has no means for performing any grouping of the articles which it conveys.

The present invention includes two sets of cooperating spacer and conveyor elements each of which have operative faces comprising a series of recesses. Articles in a feed path between the two sets of spacer and conveyor elements are spaced apart by a predetermined amount corresponding to the spacing of the recesses in the element sets to form a group and the group of spaced articles is conveyed by cooperating sets along the feed path of the mechanism.

To this end the invention provides a spacer and conveying mechanism for packaging machine in which articles are conveyed along a feed path and formed into groups for subsequent packaging, said spacer and conveying mechanism comprising a first series of spacer and conveyor elements being arranged to move along a working path in the feed direction and convey said articles in the feed path and, after releasing said articles, move along a parallel return path opposite to the feed direction, said spacer elements being constrained to move from the return path into the working path, and vice versa, transversely of the feed direction and held throughout their movement so that the operative faces thereof face toward said feed path, characterised in that the operative face of each of said spacer and conveyor elements comprise a series of recesses so that said articles are formed into groups and conveyed in said groups along the feed path, said spacer and conveying mechanism comprising a second similar series of spacer and conveyor elements, said second series being disposed in side by side relationship to said first series of spacer and conveyor elements so that said feed path is provided between the working paths of the two series of said elements, the spacer and conveyor elements of said second series being arranged to cooperate with the spacer and conveyor elements of said first series along said working path so as to form article receiving cavities therebetween in which articles are conveyed along said working path.

Embodiments of the invention will now be described by way of example, with reference to the accompanying drawings, in which:—

Figure 1 is a plan view of a mechanism according to the invention;

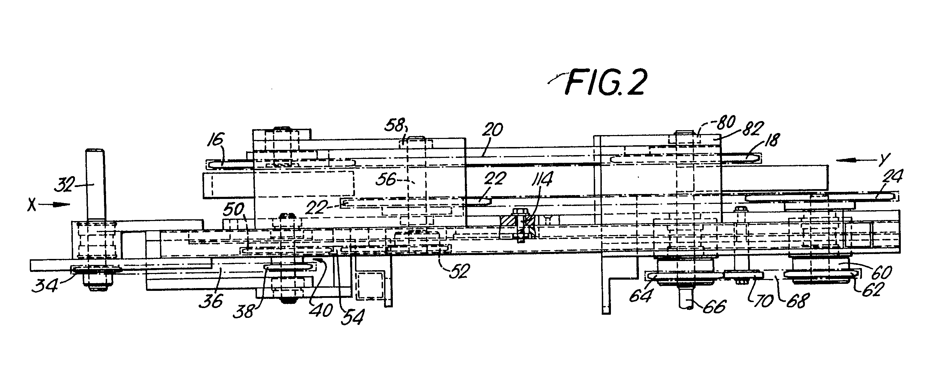

Figure 2 is a side view of the mechanism shown in Figure 1;

Figure 3 is an end view from end 'X' of Figure 2;

Figure 4 is an end view from end 'y' of Figure 2;

Figure 5 is a schematic view of two similar mechanisms according to the invention mounted side-by-side as viewed from the outfeed end thereof; and

Figure 6 is a plan view similar to Figure 1 but in which two similar mechanisms are disposed in side by side relationship.

Referring to the drawings, the spacing and conveying mechanism 10 comprises two pairs of chain and sprocket sets; an upper set 12 and a lower set 14. The upper chain and sprocket set 12 comprises spaced sprockets 16 and 18, respectively, about which is entrained chain 20. Similarly the lower chain and sprocket set 14 comprises spaced sprockets 22 and 24, respectively, about which is entrained chain 26.

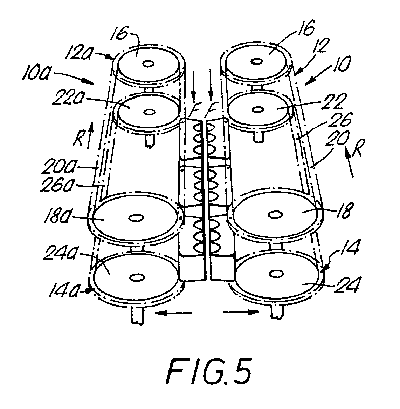

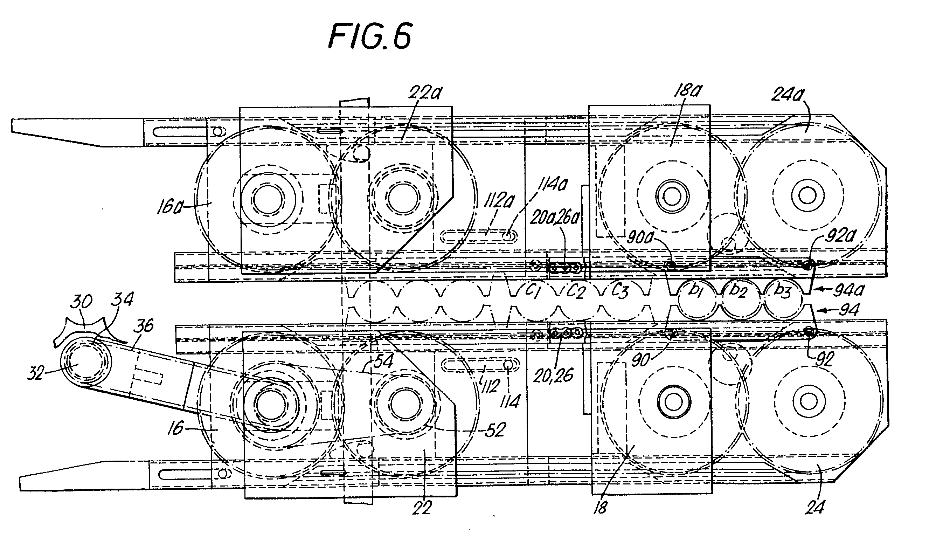

The spacing and conveying mechanism 10 is adapted to be installed in a packaging machine so that sprockets 16 and 24 are located adjacent the infeed end of the machine. Normally, two such mechanisms are installed in side-by-side relationship as shown in Figures 5 and 6 so that a bottle (or other article) feed path is provided between the mechanisms. In Figures 5 and 6 the mechanism 10a is similar to mechanism 10 to be described in more detail below and like parts are designated like reference numerals with the addition of suffix 'a'.

At the infeed end of the mechanism 10, there is provided 'star-wheel' drive assembly comprising a bottle separating star-wheel 30 for separating bottles arriving at the infeed position from a bottling line. The star-wheel 30 is carried by vertical shaft 32 which is adapted to be driven from the main drive source (not shown) of the packaging machine. An alternative (and preferred) main drive connection is referred to hereinafter. Shaft 32 also carries a sprocket 34 which transmits drive via chain 36 to sprocket 38 of sprocket assembly 40 keyed to vertical shaft 42. The lower end of vertical shaft 42 is journalled in bearings 44 and the upper end of the shaft 42 is journalled in bearings 46 mounted in a lower part of frame 48. A drive take off sprocket 50 included in assembly 40 transmits drive to sprocket 52 via chain 54. Sprocket 52 is carried by the lower end of vertical shaft 56, the upper end of which is journalled in bearing 58 mounted in an upper part of frame 48.

Sprocket 24 is carried at the upper end of vertical shaft 60, the lower end of which carries sprocket 62. Sprocket 62 drives sprocket 64 carried at the lower end of vertical shaft 66 via chain 68 and tensioning roller 70. Sprocket 64 is fixed to assembly 72 which is keyed to the shaft 66 immediately below bearing assembly 74 incorporating bearings 76, 78, respectively in which the shaft is journalled. The upper end of shaft 66 is journalled in bearing 80 housed in the upper part of frame 82 and sprocket 18 of chain and sprocket set 12 is keyed to shaft 66 immediately below journal bearing 80. As previously mentioned, drive from upper sprocket 18 to upper sprocket 16 is transmitted by means of chain 20. Sprocket 16 is keyed to stub shaft 84 journalled in an upper part of frame 48 in bearings 86 and 88 respectively.

It will be seen that the main sprockets 16, 18 of the upper chain and sprocket set 12 have their shaft axes displaced longitudinally of the mechanism with respect to the shaft axes of the main sprockets 22, 24 of the lower chain and sprocket set 14. The longitudinal spacing between the upper and lower sprockets of each end of the mechanism is equivalent to the distance between the attachment apertures 90, 92 of a bottle spacer and conveyor element 94 mounted in the space between the chain and sprocket sets 12, 14.

A series of such spacer conveyor elements is mounted between the chain and sprocket sets and each element 94 has one of its ends attached to chain 20 at its opposite end and attached to chain 26.

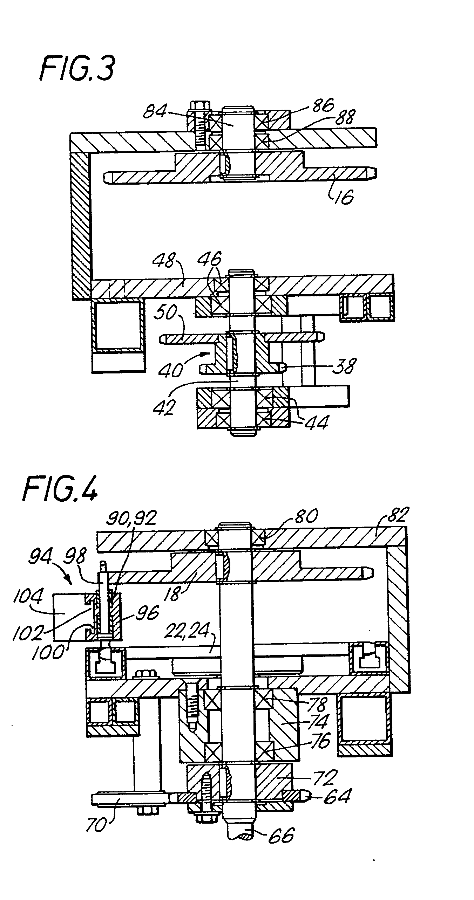

It will be appreciated from the foregoing that the chains 20 and 26 are driven in synchronism and thus each spacer and conveyor element 94 is thereby moved along the chain paths. As best seen in Figure 4, each spacer conveyor element 94 comprises a support housing 96 in which the attachment apertures 90, 92 are formed. A connecting pin 98 passes through each attachment aperture and one end of each pin 98 is connected to respective ones of the chains 20 and 26. The support housing is formed with an outwardly facing keyway 100 into which a key 102 integral with the back face of a spacer and conveyor "comb" 104 is a sliding fit. The front or outward projecting face of the comb 104 comprises a series (in this case three) bottle group-forming arcuate recesses 106, 108, 110 each to receive a peripheral wall portion of a bottle when the mechanism is in use. In operation the spacer and conveyor elements 94 are moved by the chains 20, 26 along a return path (arrow 'R') and transversely between sprockets 16 and 22 so as to progressively transfer into a bottle feed path (arrow 'F') i.e. a working path during which transfer the elements 94 interfere with a linear series of bottles in the feed path so that the bottles are separated by the comb 104 whereby one bottle is received in each of the arcuate recesses 106—110.

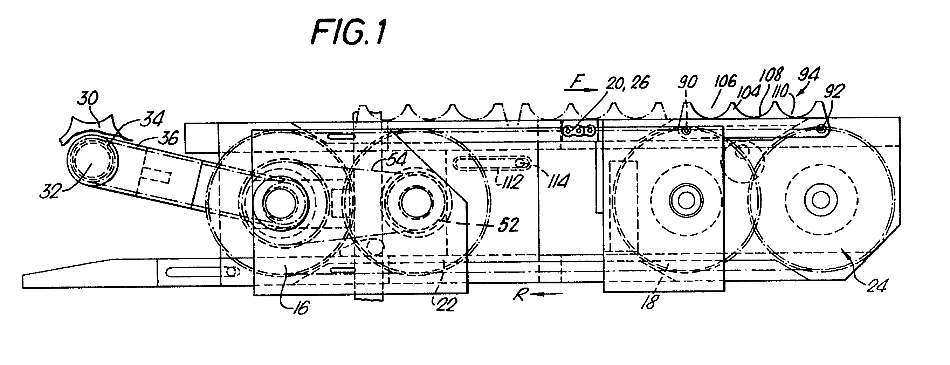

As the spacer and conveyor elements move through the bottle feed path, the bottles conveyed thereby are maintained in correctly spaced relationship and at a preselected transfer speed so that each group of bottles thus conveyed by one of said elements can be packaged together as a unit. When each spacer and conveyor element 94 reaches the outfeed end of the bottle feed path, as shown by the element in Figure 1, the element is moved transversely into the return path. It will be deduced that the connection of the element at each of its ends to the displaced chains 20, 26, necessarily causes the transverse movement to occur such that the longitudinal axis of the element remains parallel to the bottle feed and return paths and such that the outward projecting face of the comb 104 always faces toward the bottle feed path.

Where only one such mechanism is installed in a packaging machine it would be necessary to provide an abutment surface adjacent the path of movement of the elements 94 in the bottle feed path. However, the arrangement shown in Figures 5 and 6 is to be preferred, that is to say where two such mechanisms are installed in side by side relationship. It will be seen that in this arrangement the series of spacer and conveyor elements are mutually located so that they come together in timed relationship to move along the bottle feed path so as to form cavities e.g. cavities $C^1$—$C^3$ in which bottles $b^1$—$b^3$ are accommodated.

Whilst the above description relates to 'combs' having arcuate recesses for bottles, it is to be understood that combs having other shaped recesses may be provided depending upon the article to be packaged. To this end, the comb 104 is removed from the housing 96 and a replacement comb slid into position. Combs may also be inserted having recesses of different diameter as desired.

Moreover, it is envisaged that the pitch between respective chain sets may be altered which also would necessitate a corresponding change in the size of the spacer and conveyor elements, for the purpose of pitch change, that part of the support frame to which sprockets 22 and 24 are mounted may be adjustably moved relative to the support frame for the upper sprockets 16 and 18 by means of slot 112 and bolt 114 adjustor provided in the lower support frame.

It is preferred that drive from the main drive source of a packaging machine in which the mechanism is installed be connected to sprockets 64 and 66 so that each chain set is driven independently, rather than the drive connection to the infeed end of the mechanism previously referred to. However, the relative drive connections otherwise remain as described. Drive to the mating mechanism 10a may be similarly arranged.

## Claims

1. A spacer and conveying mechanism for a packaging machine in which articles are conveyed along a feed path (f) and formed into groups for subsequent packaging, said spacer and conveying mechanism (10) comprising a first series of spacer and conveyor elements (94) being arranged to move along a working path in the feed direction and convey said articles in the feed path (f) and, after releasing said articles, move aong a parallel return path (R) opposite to the feed direction, said spacer elements being constrained to move from the return path into the working path, and vice versa, transversely of the feed direction and held throughout their movement so that the operative faces thereof face toward said feed path, characterized in that the operative face of each of said spacer and conveyor elements comprises a series of recesses (106, 108, 110) so that said articles are formed into groups and conveyed in said groups along the feed path, said spacer and conveying mechanism comprising a second similar series of spacer and conveyor elements, said second series being disposed in side by side relationship to said first series of spacer and conveyor elements so that said feed path is provided between the working paths of the two series of said elements, the spacer and conveyor elements of said second series being arranged to cooperate with the spacer and conveyor elements of said first series along xaid working path so as to form article receiving cavities (c) therebetween in which articles are conveyed along said working path.

2. Mechanism according to claim 1, further characterized in that said spacer and conveyor elements are mounted on a set of endless chains (12, 14) said set of endless chains comprising an upper chain (2) and a lower chain (26) mounted for synchronous movement on sprockets (16, 18, 22, 24) disposed in spaced horizontal planes, said upper and lower chains being vertically aligned with each other but longitudinally offset in the direction of the feed path, and in that each of said spacer and conveyor elements has the leading end thereof attached to one of said chains (20) and the trailing end thereof attached to the other of said chains (26) by means of pivotal connections (98), said upper chain being offset relative to said lower chain by an amount which is substantially equal to the distance between said connections between said leading and trailing ends of said elements and the respective chains.

3. Mechanism according to claim 2, further characterized in that said recesses are arcuate.

4. Mechanism according to claim 2, further characterized in that said spacer and conveyor elements comprise removable blocks mounted in a support housing which is connected to said endless chains.

## Patentansprüche

1. Mechanismus zum Fördern von Gegenständen in gleichen Abständen zu einer Verpackungsmaschine, bei der die Gegenstände entlang eines Zuführweges (f) befördert und in Gruppen für das nachfolgende Verpacken aufgeteilt werden, wobei der Mechanismus (c) eine erste Reihe von Abstandshaltern und Förderelementen (94) aufweist, die für eine Bewegung entlang eines Arbeitsweges in Richtung der Zuführung, zum Fördern der Gegenstände in dem Zuführweg (f) und, nach dem Freigeben der Gegenstände, für eine Bewegung entlang eines parallelen Rückführweges (R) in Gegenrichtung zu der Zuführrichtung angeordnet sind, wobei sich die Abstandshalteelemente erzwungenermaßen von dem Rückführweg in den Arbeitsweg und, umgekehrt, quer zu der Zuführrichtung bewegen und während ihrer Bewegung gehalten werden, so daß ihre Arbeitsflächen in Richtung des Zuführweges weisen, dadurch gekennzeichnet, daß die Arbeitsfläche jedes Abstandshalter- und Förderelements eine Reihe von Ausnehmungen (106, 108, 110) aufweist, so daß die Gegenstände in Gruppen aufgeteilt und in diesen Gruppen entlang des Zuführweges befördert werden, wobei der Mechanismus eine zweite ähnliche Reihe von Abstandshalte- und Förderelementen aufweist, die in einer Seitean-Seite-Beziehung zu der ersten Reihe von Abstandshalte- und Förderelementen angeordnet sind, so daß der Zuführweg zwischen den Arbeitswegen der zwei Reihen besagter Elemente liegt, wobei die Abstandshalte- und Förderelemente der zweiten Reihe für ein Zusammenwirken mit den Abstandhalte- und Förderelementen der ersten Reihe längs des Arbeitsweges angeordnet sind, um so die Gegenstände aufnehmende Mulden (c) zwischen sich zu bilden, in denen die Gegenstände entlang des Arbeitsweges befördert werden.

2. Mechanismus nach Anspruch 1, dadurch gekennzeichnet, daß die Abstandshalte- und Förderelemente auf einem Satz endloser Ketten (12, 14) montiert sind, wobei der Satz endloser Ketten eine obere Kette (2) und eine untere Kette (26) aufweist, die für eine synchrone Bewegung auf Zahnrädern (16, 18, 22, 24) laufen, welche in beabstandeten horizontalen Ebenen angeordnet sind, wobei die obere und untere Kette vertikal miteinander ausgerichtet, horizontal aber in Richtung des Zuführweges versetzt sind, und daß jedes der Abstandshalte- und Förderelemente mit dem Führungsende an einer der Ketten (20) und mit dem nachlaufenden Ende an der anderen Kette (26) mittels schwenkbarer Verbindungen (98) angebracht ist, wobei die obere Kette in Bezug auf die untere Kette versetzt ist um eine Strecke, die im wesentlichen gleich dem Abstand zwischen den Verbindungen zwischen den Führungsenden und den nachlaufenden Enden der Elemente und der entsprechenden Ketten ist.

3. Mechanismus nach Anspruch 2, dadurch gekennzeichnet, daß die Ausnehmungen bogenförmig ausgebildet sind.

4. Mechanismus nach Anspruch 2, dadurch gekennzeichnet, daß die Abstandshalte- und Förderelemente entfernbare Blöcke aufweisen, die in einem mit den Endlosketten verbundenen Stützgehäuse sitzen.

**Revendications**

1. Mécanisme d'espacement et de convoyage pour machine d'emballage dans lequel des articles sont acheminés sur une trajectoire d'alimentation (F) et formés en groupes pour emballage ultérieur, ce mécanisme d'espacement et de convoyage (10) comprenant une première série d'éléments d'espacement et de convoyage (94) agencée pour se déplacer sur une trajectoire de travail dans le sens d'alimentation et convoyer les articles dans la trajectoire d'alimentation (F) et, après déchargement de ces articles, se déplacer sur une trajectoire de retour parallèle (R) opposée au sens d'alimentation, ces éléments d'espacement étant commandés pour se déplacer de la trajectoire de retour vers la trajectoire de travail et, vice-versa, transversalement au sens d'alimentation, et étant maintenus pendant leur mouvement pour que les faces opératoires correspondantes soient orientées vers la trajectoire d'alimentation, mécanisme caractérisé par le fait que la face opératoire de chacun des éléments d'espacement et de convoyage comprend une série d'évidements (106, 108, 110) pour que les articles soient disposés en groupes et acheminés groupés sur la trajectoire d'alimentation, ce mécanisme d'espacement et de convoyage comprenant des secondes séries similaires d'éléments d'espacement et de convoyage qui sont disposées latéralement à la première série d'éléments d'espacement et de convoyage de façon à ce que que la trajectoire d'alimentation se trouve entre les trajectoires de travail des deux séries des éléments, les éléments d'espacement et de convoyage des secondes séries étant agencés pour coopérer avec les éléments d'espacement et de convoyage de la première série sur la trajectoire de travail de manière à former des cavités de réception d'articles (C) entre elles et dans lesquelles les articles sont convoyés sur la trajectoire de travail.

2. Mécanisme selon la revendication 1, caractérisé par le fait que les éléments d'espacement et de convoyage sont montés sur un ensemble de chaînes sans fin (12, 14), ces chaînes sans fin comprenant une chaîne supérieure (2) et une chaîne inférieure (26) montées pour assurer un mouvement synchrone sur des pignons (16, 18, 22, 24) disposés en plans horizontaux espacés, les chaînes supérieure et inférieure étant alignées verticalement l'une par rapport à l'autre, mais décalées longitudinalement dans le sens de la trajectoire d'alimentation, et par le fait que l'extrémité avant de chacun des éléments d'espacement et de convoyage est fixée à l'une des chaînes (20) et l'extrémité arrière est fixée à l'autre des chaînes (26) au moyen d'articulations (98), la chaîne supérieure étant décalée par rapport à la chaîne inférieure d'une valeur sensiblement égale à la distance entre les articulations entre les extrémités avant et arrière des éléments et des chaînes respectives.

3. Mécanisme selon la revendication 2, caractérisé par le fait que les évidements sont de forme incurvée.

4. Mécanisme selon la revendication 2, caractérisé par le fait que les éléments d'espacement et de convoyage comprennent des blocs amovibles montés dans un logement de support relié aux chaînes sans fin.

FIG.1

FIG.2

FIG.3

FIG.4

FIG.5

4

## FIG.6

22a

18a

24a

16a

112a

114a

20a,26a

90a

92a

$C_1$  $C_2$  $C_3$  $b_1$  $b_2$  $b_3$  94a

94

30  34

36

54

112

114

20,26

90

92

32

16

52

22

18

24